# EUROPEAN PATENT APPLICATION

(11) **EP 0 634 185 A2**
(43) Date of publication of application: **18.01.1995**
(21) Application number: 94100792.4
(22) Date of filing: 20.01.1994
(51) Int. Cl.: A61M 16/00, G01L 27/00, G01L 19/08, G01L 19/02

(54) **Digital dual pressure guage**

(30) Priority: 12.07.1993 US 89102
(71) Applicant: Milliken, Ralph A., New City, NY (US)
(72) Inventor: Milliken, Ralph A., New City, NY (US)
(74) Representative: Müller, Hans-Jürgen, Dipl.-Ing.

(57) **Abstract**

A digital readout dual pressure gage is disclosed which, for example, may be used in the medical field as a pressure gage for entdotracheal tube cuff gases and a pressure gauge for inspiratory pressure. However, the dual pressure gage of the present invention may be used in any application where positive and negative pressure with respect to atmospheric, is desired to be measured. The digital readout dual pressure gage of the present invention is a hand held device which comprises an automatic zero setting with respect to ambient atmospheric, a digital liquid crystal display, a low battery indicator, an over and under range indicator and an automatic pre-determined, pre-specified turn-off time.. The entire gage is controlled by an electronic circuit comprising a micro-machined silicon pressure sensor and an analog to digital signal processor, all powered by lithium batteries. The foregoing abstract is merely a resume of a general application and description of the principles of operation and application of the digital dual pressure gage of the present invention, and is not to be construed as a limitation on the scope of the claimed subject matter.

## Description

### TECHNICAL FIELD:

The present invention generally relates to a gas pressure gage.

### BACKGROUND ART

In the past, portable pressure gages have not been the most accurate instruments and very few portable gages have the ability to register both positive and negative gas pressures. Such gages that are digital have been used in the prior art, an example of such hand held digital gages is digital readout vehicle tire gage and others. A number of the gages use a load cell to develop a voltage proportional to the weight of an object. However, many of these digital readout gages are large, cumbersome and are often costly. Other digital readout gages pressure transducers or a variable electrode capacitor but all are relatively large and cumbersome and require excessive electrical energy to operate.

It is, therefore highly desirable to develop a small compact, light weight, hand held, digital readout dual pressure gage that is highly accurate, presents a dual gas pressure (positive and negative) and still requires a minimum of electrical energy and saves energy when in use.

The following art has been found to be related to the field of the present invention but in no way do any of the herein cited references anticipates or even suggest the novel advance in the art that the present invention makes.

U.S. Patent No. 3,886,473, issued to Heyck on May 27, 1975 entitled Capacitive Pressure and Displacement Transducers, which discloses a capacitive transducer for converting a small displacement of a mechanical input member into an electrical signal directly proportional to quantity being measured. The only similarity that Heyck has to the digital readout dual pressure gage of the present invention is that they both have a digital readout.

U.S. Patent No. 3,762,223, issued to Feuer, et al.. on Oct. 2, 1973 entitled Digital Pressure Transducer, which discloses a device to measure fluid pressure which is applied differentially to a diaphragm, causing the diaphragm to vibrate at a natural frequency, and sensing the stressing of the diaphragm terms of the resulting change in the natural frequency. Again the only similarity that Feuer, etal. has to the digital readout dual pressure gage of the present invention is that they also both have a digital readout.

U.S. Patent No. 3,657,926, issued to Munson et al. on April 25, 1972, entitled Method and Apparatus for Measuring Physical Phenomena, which discloses a closed loop measuring system which includes a digital computer, which computer controls and monitors the establishment of known and unknown conditions of a physical phenomena such as pressure, in the measurement device responsive to the conditions established therein for producing relative data values which are stored in the computer memory. This reference is even further away from the present invention. The digital dual pressure gage is portable or hand held and is not controlled by a computer but only uses some computer chips in its circuitry, while Munson etal. relies primarily on a computer and certainly it is not portable.

U.S. Patent No. 3,777,828 issued to Dietemeyer on Dec. 11,1973 entitled, Electronic Weighing Scales with Digital Readout, which discloses an electronic weighing system with a digital readout comprising a transducer that establishes an analog signal corresponding to a weight, an amplified and an analog to digital converter applies it to a digital readout. This disclosure is even further away from the hand held digital read out dual pressure gage of the present invention. Dietemeyer does not disclose a dual pressure function, an automatic zero calibration function and is certainly not hand held or portable

### OBJECTS OF THE INVENTION

It is the object of the present invention to provide a digital dual range pressure gage that is hand held, light weight and accurate.

Another object of the present invention is to provide a digital dual range pressure gage that is self calibratable, to zero with respect to ambient atmospheric pressure

A further object of the present invention is to provide a digital dual range pressure gage that will automatically display a low battery signal, a too high and a too low pressure indication and have an automatic turn-off after a preset period of time

A still further object of the present invention is to provide a digital dual range pressure gage that will measure positive pressure in an endotracheal cuff device and negative pressure, with respect to atmospheric, to determine maximum inspiratory pressure.

### DISCLOSURE OF THE INVENTION

These and other objects of the invention are accomplished by providing a portable or hand held electronic device comprising a light weight housing that may be constructed from such materials as plastic, aluminum, titanium, or the like. Said housing is provided with an electronic circuit that consists of a micro machined silicon pressure sensor and an analog to digital signal processor. The said silicon sensing means is housed in a chamber at the inlet of the gage and is the only electronic component of the gage of the present invention, to contact the pressures of the gases to be measured. Said sensor measures pressure by detecting stress on a small silicon diaphragm which bends or deforms when gas pressure is applied. Said analog to digital signal processor circuitry monitors the stress on said silicon diaphragm and converts the voltages produced into a calibrated scale and display reading, both for positive and negative pressures. The device of the present invention is powered by any high energy batteries and preferably lithium batteries.

The circuitry of said silicon diaphragm that is housed in the gage includes the automatic self calibrating feature of the gage of the present invention.

Upon the initial power on with the gage inlet port open to ambient atmospheric pressure, the gage automatically measures said ambient pressure and uses this as the reference point for the measurements that are to be taken and sets the digital read out to zero. The digital read out turns on about 0.2 seconds alter and the calibration is carried out during this period . When the digital read out comes on it reads zero. This circuitry also detects low battery energy and reports same. During the measuremen operation this same circuitry detects off scale readings both positive and negative and reports same to the digital readout

Various other objects, advantages and features of the present invention will become apparent to those skilled in the art from the following discussions, taken in conjunction with the accompanying drawings, which constitute part hereof, wherein:.
FIG. 1 is a front plan view of the Dual Range Pocket Respiatory Pressure Gage of the present invention.
FIG. 2 is a side perspective view of the Dual Range Pocket Respiatory Pressure Gage of the present invention.
Fig. 3. is a schematic block diagram representing an illustrative electronic system for use in the Dual Range Pocket Respiatory Pressure Gauge of the present invention.

### DESCRIPTION OF THE PREFERRED EMBODIMENTS OF THE PRESENT INVENTION

The following is a discussion and description of the preferred specific embodiments of the digital dual gas pressure gage of the present invention, such being made with reference to the drawings, whereupon like reference numbers are used to indicate the same or similar parts and / or structure. It is to be understood that such discussion and description is not to unduly limit the scope of the present invention.

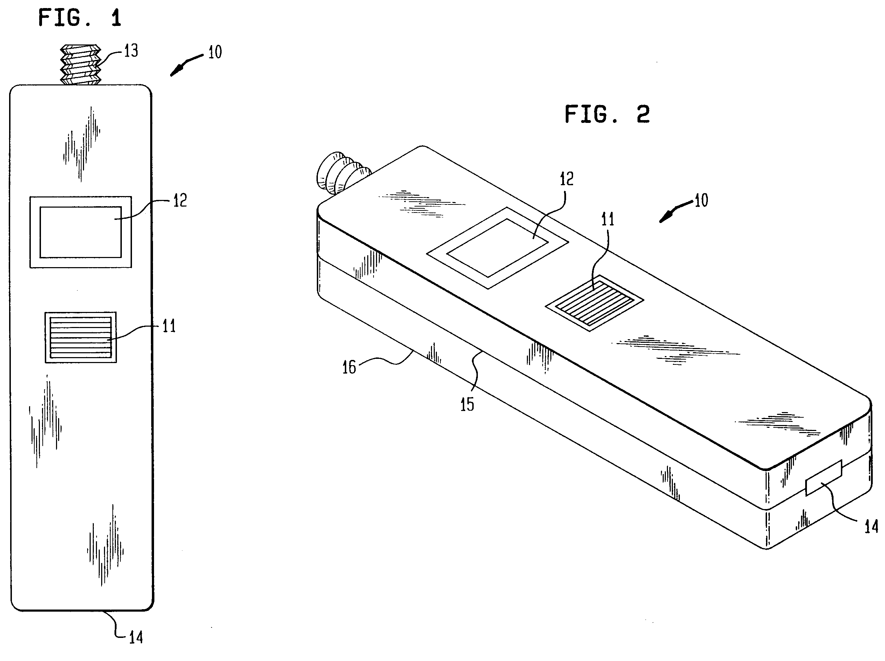

Referring now to Fig. 1. wherein the Dual Range Pocket Respiratory Pressure Gauge is shown at 10, the on/of switch is at 11, the LED readout is at 12, at 13 is the Luer thread connection and the battery compartment opening slot if at the bottom of gauge 10 at 14.

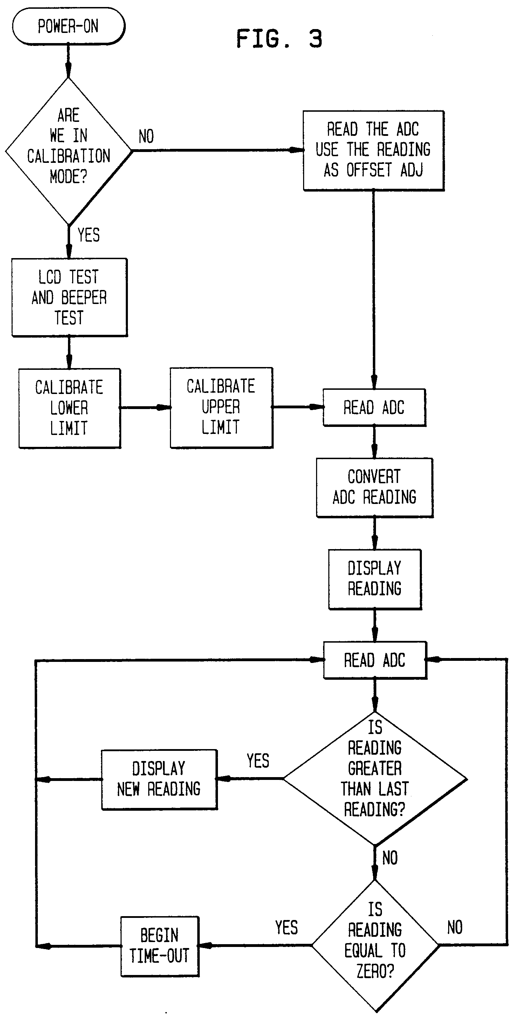

In perspective view of Fig. 3., the Dual Range Pocket Respiratory Pressure Gage is shown with like numbers as in Fig. 1, with the battery compartment shown at 14 and the removable back seam is shown at 15. When back 16 is removed the batteries may be replaced and the electronics of Fig. 3. are exposed Fig. 3. is a diagrammatic block flow chart of the electronic operation of the gage of the present invention wherein the power-on is at 30, the auto-zero function module is at 31, which calibrates the pressure readings to atmospheric pressure and also acts as an internal check calibration of the electronics of the gauge 10. During the first 0.2 seconds after the power-on switch 30 is activated, module 31 measures the pressure at the Luer thread connection inlet 13, converts the voltages obtained to an accurate value, and converts the reading to the read-out 12, which may be either an LED or an LCD.. If the battery is low, the test module 33 will either keep the read-out 12 dark, or send a low battery warning to the read-out 12, warning the operator that the battery should be replaced. Module 34 calibrates the device lower limit and module 35 calibrates the upper pressure limit. Module 36 reads the ADC and 37 coverts ADC to display reading at 38 and 39, which is read-out 12 The read-out at 12 sends the pressure signal to module 40 which determines if a signal is sent to display 42 or to 43 through 41.

### EXAMPLE OF THE OF THE DUAL RANGE POCKET RESPIRATORY GAGE TO MEASURE MAXIMUM INSPIRATORY PRESSURE

1. The patient is instructed regarding the respiratory maneuvers required in this procedure and confirms that he understands them.
2. The patient must be well oxygenated.
3. The gage of the present invention is attached to the control chamber of a two valved "T" mounted on the patient's endotracheal airway device, using transfer tubing..
4. The inspiratory side of the valved "T" is occluded bt the therapist and the patient is encouraged to perform a maximum inspiratory effort. As required, the patient is further oxygenated and repeat the maneuvers until a consistent result is obtained. Inconsistent pressure readings may be due to miscommunication between the patient and the Therapist, poor coordination between the Therapist and the patient, poor patient muscle force, clouded patient sensorium, language (communications) barriers, a leak between the airway gauge of the present invention and the patient's body (airway leak), etc.
4. Chart the negative pressures generated by the patient in the appropriate Respiratory Therapy Form.
5. Disconnect the patient from the gage and confirm that the patient is returned to either the same inspired gas mixture and Respiratory Therapy circuit as before the pressures were measured, or that the mixture and connections are appropriate to Physician's Orders and/or Hospital Procedures.

From the foregoing, it can readily be seen that the present invention provides greatly improved methods and devices for the measurement of physical phenomena. In view of the foregoing description, the principles of the present invention can readily be extended by those skilled in the art to measurement of physical phenomena other then those specifically disclosed herein. Thus, although the present invention has been described with reference to particular preferred embodiments thereof, many changes and modification will become readily apparent to those skilled in the art in view of the foregoing description which is intended to be illustrative and not limiting of the present invention that is defined by the scope of the appended claims.

## Claims

1. A dual range pocket respiratory pressure gage comprising an elongated housing, power means for said gauge, means to power-on and off said gage, an LED display provided to display readings for said gage, means for automatic calibration with power-on, means to detect readings higher than last and display same and means to detect less than ambient gas pressures and display zero.

2. The dual range pocket respiratory pressure gauge of Claim 1 wherein said power means is provided by battery means selected from the range of from about 6 volts to about 9 volts.

3. The dual range pocket respiratory pressure gauge of Claim 1 wherein said means for automatic calibration is comprised of a silicon sensor.

4. The dual range pocket respiratory pressure gauge of Claim 1 wherein said power means is provided by battery means in the range of from about 6 volts to about 9 volts and said means for automatic calibration is comprised of a silicon sensor.
